# EUROPEAN PATENT SPECIFICATION

(11) **EP 4 017 761 B1**
(45) Date of publication and mention of the grant of the patent: **07.06.2023**
(21) Application number: 21749717.1
(22) Date of filing: 02.08.2021
(51) Int. Cl.: B60N 2/56

(54) **VEHICLE COCKPIT COMPONENT PROVIDED WITH AN IMPROVED HEATING DEVICE**
BAUTEIL EINES FAHRZEUG-COCKPITS MIT EINER VERBESSERTEN HEIZVORRICHTUNG
COMPOSANT DE POSTE DE PILOTAGE DE VÉHICULE POURVU D'UN DISPOSITIF DE CHAUFFAGE AMÉLIORÉ

(30) Priority: 07.08.2020 IT 202000019798
(43) Date of publication of application: 29.06.2022
(73) Proprietor: MARTUR ITALY S.R.L., 20121 Milano (IT)
(72) Inventor: ÜSTÜNBERK, Can, 10095 Grugliasco (TO) (IT); SERRA, Tiziano, 10095 Grugliasco (TO) (IT); UKUSER, Gökçen, 10095 Grugliasco (TO) (IT); BAS, Serkan, 10095 Grugliasco (TO) (IT); BORRI, Marco, 10095 Grugliasco (TO) (IT)
(74) Representative: Robba, Pierpaolo
(86) International application number: PCT/IB2021/057053
(87) International publication number: WO 2022/029602

(56) References cited:
- US-A1- 2005 103 773
- US-B2- 10 314 111

## Description

### Technical Field

The present invention relates to a vehicle cockpit component provided with an improved heating device.

More particularly, but not exclusively, the present invention relates to a vehicle seat provided with an improved heating device.

The present invention relates to a vehicle cockpit component provided with a heating device which is intrinsic to the structure of the vehicle cockpit component, e.g. of the vehicle seat.

### Background Art

Vehicle seats provided with heating devices, aimed to improve the users' comfort, are known and widely used.

In general, such heating devices include electric / electronic components which are separate and independent from the vehicle seat, and which are incorporated into the vehicle seat during the assembling process of the latter.

By way of example, such heating devices may include electric plates which are arranged between the upholstery and the padding of the vehicle seat at the cushion area and/or at the backrest area.

As an alternative, such heating devices may include thermoelectric components, adapted to selectively perform both heating and cooling of the vehicle seat cushion and/or backrest.

Such heating device may optionally include means for generating an air flow through the vehicle seat cushion and/or backrest, as well as a piping arrangement for air circulation.

Such known heating device have several drawbacks.

First of all, they require a significant energy consumption for reaching and maintaining a desired temperature, sufficient for ensuring users' comfort.

Secondly, they have a relevant thermal inertia, so that a quite long time is needed for reaching the desired temperature.

Moreover, the presence of the additional components of such heating devices involves an increase in manufacturing costs and times, as well as in risks of failures and malfunctions due to an incorrect assembly of such additional components in the vehicle seat.

Last but not least, there is a constant request for reducing the weight of the elements of the vehicle cockpit, namely of the vehicle seats, and it is evident that the presence of the components of the heating devices involves an additional weight, which is not desirable.

Document US 2005/0103773 discloses a surface heating with an electrically conductive plastic and a vehicle cockpit component provided with such surface heating. The surface heating includes a carrier and a heating layer, which contains electrically conductive plastic, wherein the heating layer is formed by a flexible film and the carrier is flexible.

The electrically conductive plastic can be foaming or foam-plastic material and electrically conductive polyurethane may be used as the plastic material.

The foaming or foam-plastic material (e.g. electrically conductive polyurethane) in flowable or liquid state is applied by rolling, brushing, or spraying onto the carrier, thus forming an outer film or skin; as an alternative, the heating film can also be separately manufactured, and then joined to the carrier, for instance by cementing or sewing or welding.

According to the disclosure of US 2005/0103773, the surface heating can be applied to a vehicle seat, and in this case the heating film and the carrier can placed over the padding of the vehicle seat, i.e. between the padding and the upholstery, or over the upholstery of the vehicle seat. However, the vehicle heating is not limited to application to vehicle seats and it can also be applied to other cockpit components, such as the instrument panel or even the windshield.

This solution, while having the advantage of replacing discrete elements such as heating plates or pipes by a continuous film, is not free from drawbacks.

More particularly, the heating film and the attached carrier are separate elements that are applied to an existing component of the vehicle cockpit, which involves an increase in both manufacturing time and manufacturing costs.

Moreover, the provision of separate elements and respective means for fastening such element to the vehicle cockpit component result in a poor reliability of the final product, as the connections of such elements with each other and with the vehicle cockpit component can deteriorate over time, with the risk of undesired, relative displacements.

Therefore, the main object of the present invention is to overcome the above-mentioned drawbacks by providing a vehicle seat equipped with a heating device that is intrinsic to the vehicle seat constriction and does not involve the introduction of additional components.

A further object of the present invention is to provide a vehicle seat equipped with a heating device having low energy consumption, as well as low thermal inertia.

### Summary of Invention

According to the invention, the vehicle cockpit component is provided as defined in claim 1.

The at least one electrically conductive filler may be a carbon-based filler or a metal-based filler, or a combination thereof.

The polyurethane foam thus charged / impregnated acts as a resistive material with good thermal conductivity properties.

Polyurethane foams are commonly used for manufacturing padding of the cushion and the backrest of vehicle seats.

Moreover, polyurethane foams are also used for manufacturing upholstery of the cushion and the backrest of vehicle seats. Namely, a polyurethane foam can be coupled by lamination to the outer aesthetic covering material (which can be made e.g. of polyester, polyamide, leather, and the like) in order to obtain a multilayer upholstery which guarantees an improved comfort to users and facilitates fitting the upholstery itself onto the vehicle seat during manufacturing and assembly processes.

Polyurethane foams are dielectric polymeric materials, i.e. they are electrically insulating. Charging and/or impregnating a polyurethane foam with electrically conductive particles makes the material resistive, i.e. electrically conductive in the presence of an applied voltage.

According to a first aspect of the invention, polyurethane foam is charged with at least one electrically conductive filler, by mixing electrically conductive particles to one of the components used for producing the foam itself. According to well-known statistical percolation theory, a composite material consisting of an insulating matrix charged with an electrically conductive filler undergoes an insulator-to-conductor transition when the conductive filler content is gradually increased. The percolation threshold represents a critical filler content, at which the measured electrical conductivity of the composite material sharply jumps up several orders of magnitude due to the formation of a continuous electrically conducting network. Below the percolation threshold, the conducting network is not established and the electrical properties of the composite material are dominated by the insulating matrix material. On the other hand, if the concentration of the electrically conductive filler is above the percolation threshold, the formation of a conducting network in the composite material is obtained and the composite material behaves as an electrical conductor.

The percolation threshold can be seen as the concentration of particles of electrically conductive filler at which the formation of the first percolative pathway occurs within the insulating matrix. As the concentration of conductive particles increases, there is an increase in the electrical conductivity of the polyurethane foam until a maximum value is reached, corresponding to the saturation of the percolative pathways.

The percolation threshold, as well as the saturation threshold, depends on the specific characteristics of the matrix and of the filler.

In the range between percolation threshold and saturation threshold, polyurethane foams charged with electrically conductive fillers act as resistive materials with good thermal conductivity properties.

Therefore, according to the invention, the vehicle cockpit component is provided with a heating device including a polyurethane-based foam charged with electrically conductive particles, in which the concentration of said electrically conductive particles is higher than the percolation threshold, and preferably comprised between the percolation threshold and the saturation threshold, and such heating device is used for manufacturing a padding and/or an upholstery of the vehicle cockpit component.

According to a second aspect of the invention, the polyurethane foam, already formed, is impregnated by immersion in a solution containing at least one electrically conductive filler.

Therefore, according to the invention, the vehicle cockpit component is equipped with a heating device comprising a polyurethane foam impregnated with electrically conductive particles, wherein the concentration of said electrically conductive particles is higher than a minimum threshold, corresponding to the minimum concentration of conductive particles necessary to trigger a first continuous conductive pathway on the internal/external walls of the polyurethane foam, and preferably comprised between this said minimum threshold and a maximum threshold, corresponding to the concentration of conductive particles that leads to the uniform and homogeneous impregnation of the polyurethane foam and to the saturation of all the internal and external surface bonds, and such heating device is used for manufacturing a padding and/or an upholstery of the vehicle cockpit component.

Use of such polyurethane foams charged with electrically conductive fillers is known in the art, for instance from US 2019/184869 and US 2019/126792.

However, in prior art polyurethane foams charged with electrically conductive fillers are merely used for improving the transmission of heat from a conventional heating device embedded in the padding of the vehicle seat and the outer surface of said vehicle seat.

On the other hand, according to the present invention, the polyurethane foams charged and/or impregnated with electrically conductive fillers is used for generating heat: the basic idea of the invention is that such polyurethane foams charged and/or impregnated with electrically conductive fillers, being a resistive material, will generate heat by Joule effect when subjected to a potential difference, due to the electrical current passing therethrough.

To this purpose, in the vehicle seat according to the invention the polyurethane foam charged and/or impregnated with electrically conductive fillers is directly connected with means for generating a voltage difference.

According to a preferred embodiment of the invention, the polyurethane foam charged and/or impregnated with electrically conductive fillers is arranged between and coupled to a pair of metal electrodes, which are bonded to the foam by means of a conductive glue or paste or resin.

According to another preferred embodiment of the invention, the polyurethane foam charged with electrically conductive fillers is arranged between and coupled to a pair of electrodes obtained by means of flexible printed circuit boards (FPCB).

According to a still another preferred embodiment of the invention, the surface of the polyurethane foam charged and/or impregnated with electrically conductive fillers is printed with electrically conductive inks for forming a pair of electrodes.

According to a further preferred embodiment of the invention, a metal electrodes arrangement is embedded in the polyurethane foam charged and/or impregnated with electrically conductive fillers.

Furthermore, in order to effectively use the polyurethane foams charged with electrically conductive fillers for generating heat, the concentration of electrically conductive particles is chosen so as to be close to the saturation threshold.

For instance, considering the range between the percolation threshold and the saturation threshold, the concentration of electrically conductive particle will be selected in the 50% of said range closer to the saturation threshold, preferably in the 20% of said range closer to the saturation threshold.

It is evident that combinations of the above-mentioned techniques, as well as other technique within the reach of the person skilled in the art, could also be used for manufacturing the electrodes.

Such electrodes will be suitably connected an electronic circuit for control and power generation. More particularly, such control and power generation circuit will provide the electrodes with an operating potential difference, obtained by drawing energy from the vehicle battery.

According to a preferred embodiment of the invention, the polyurethane foam charged with electrically conductive fillers is used as padding of the cushion and/or of the backrest of the vehicle seat.

According to an alternative preferred embodiment of the invention, the polyurethane foam charged and/or impregnated with electrically conductive fillers is used as upholstery for the cushion and/or for the backrest of the vehicle seat.

In this embodiment, the polyurethane foam charged and/or impregnated with electrically conductive fillers is laminated to an outer decorative material so as to form a multilayer upholstery for the cushion and/or for the backrest of the vehicle seat.

It will be evident to the person skilled in the art that in both the above-mentioned embodiments, an existing component of the vehicle seat - once suitably modified by introduction of electrical conductive fillers - is exploited for obtaining the heat generating device, thus obtaining a heating device which is intrinsic to the structure in the vehicle seat constriction.

Such arrangement is remarkably different with respect to the solution disclosed in US 2005/0103773, according to which a heating device made as a film, along with a carrier, is separately manufactured and applied to the existing component of the vehicle seat.

Such arrangement involves evident advantages.

By eliminating the need for separate heating devices, the overall number of components of the vehicle seat is reduced, which results in reduction of manufacturing costs and time. Moreover, the risk of errors in assembling the vehicle seat is also significantly reduced.

By eliminating the need for separate heating devices, the overall weight of the vehicle seat is also reduced, which is highly desirable for vehicle manufacturers.

Advantageously, the heating device obtained according to the teachings of the present invention does not require appropriate sensors for temperature control as it can be used as a sensor itself: as the temperature of the foam changes, the foam resistance also varies, so that the control circuit can monitor the resistance variation and derive information about temperature therefrom.

By eliminating the need for a temperature sensing arrangement, the number of overall components can be further reduced, with corresponding reduction in manufacturing costs, assembling time and risk of errors and overall weight.

On the other hand, such arrangement involves additional technical problems to be solved with respect to the solution disclosed in US 2005/0103773, so that it is not obvious in view of the teachings of this document.

More particularly, in the claimed invention the same device has to play two different functions: heating and, at the same time, providing a comfortable support to the user.

These functions are carried out by different elements in the arrangement disclosed in US 2005/0103773. Instead, in the present invention the heating device itself is used as padding and/or upholstery of the vehicle cockpit component.

This means that the mechanical features of the resulting polyurethane-based foam are as essential as the heat conduction behaviour of such foam.

Accordingly, both the amount of particles of electrically conductive filler and the procedure by means of which said particles are added (charged / impregnated) to the foam shall be selected by taking into account both the mechanical properties and the heat conduction properties.

More particularly, the risk that the foam structure collapses due to the addition of these particles of electrically conductive filler shall be avoided.

This problem is neither dealt with nor even mentioned in US 2005/0103773, since in the disclosed arrangement the mechanical properties of the heating film are not relevant.

In a preferred embodiment of the invention, in order to prevent the foam structure from collapsing due to the addition of the particles of electrically conductive filler, one or more blowing agents are also added to the polyurethane-based foam.

In detail, the type and amount of blowing agent(s) are selected as a function of the amount of particle of electrically conductive filler.

Although the main application to the invention is manufacturing of vehicle seats provided with an integrated heating device, such application is not to be intended in a limiting way.

To the contrary, the invention can be advantageously implemented for manufacturing any other component of the vehicle cockpit that comprises or may comprise a padding and/or an upholstery.

For instance, the present invention can be implemented for manufacturing the inner panels of vehicle doors or the cockpit headliner.

Such application could be particularly interesting for electric vehicle, in which it is not possible to exploit the heat generated by an IC engine for heating the space inside the cockpit.

### Brief Description of Drawings

Further features and advantages of the invention will become more evident from the detailed description of some preferred embodiments thereof, given by way of non-limiting example, with reference to the attached drawings, in which:
**Fig.1**

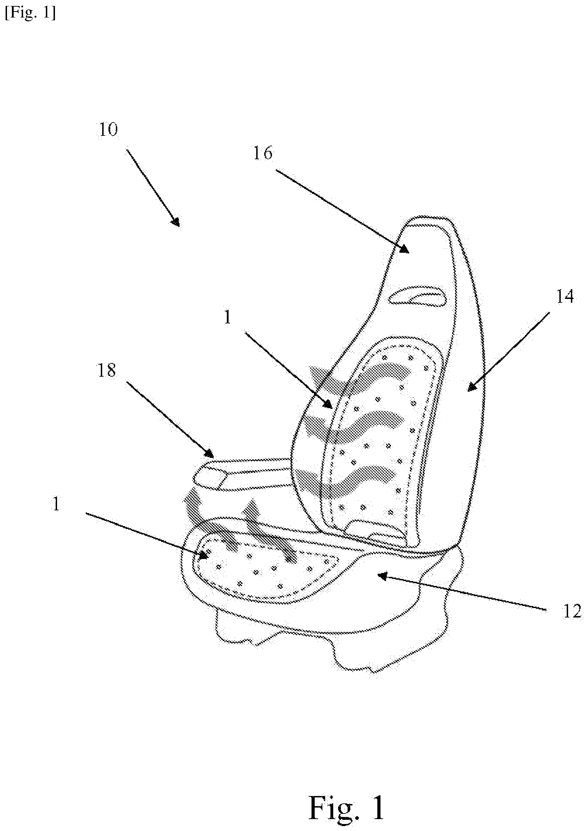

   [Fig. 1] schematically shows a vehicle seat provided with a heating device according to a first preferred embodiment of the invention.
**Fig.2**

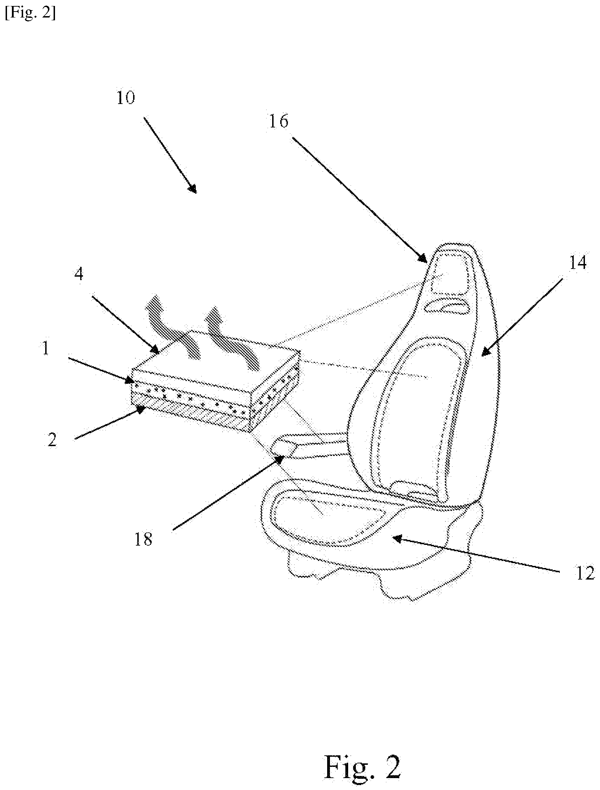

   [Fig.2] schematically shows a vehicle seat provided with a heating device according to a first preferred embodiment of the invention.
**Fig.3**

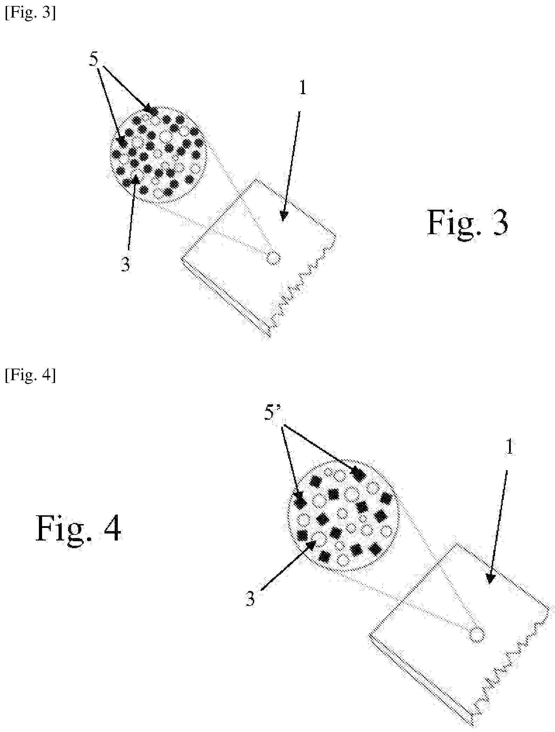

   [Fig.3] schematically shows the structure of a possible polyurethane-based foam charged with an electrically conductive filler that can be used for manufacturing the heating device of the vehicle seats of Figures 1 and 2.
**Fig.4**
   [Fig.4] schematically shows the structure of another possible polyurethane-based foam charged with an electrically conductive filler that can be used for manufacturing the heating device of the vehicle seats of Figures 1 and 2.
**Fig.5**

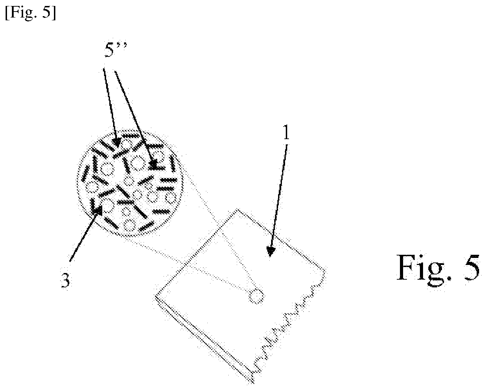

   [Fig.5] schematically shows the structure of a further possible polyurethane-based foam charged with an electrically conductive filler that can be used for manufacturing the heating device of the vehicle seats of Figures 1 and 2.
**Fig.6**

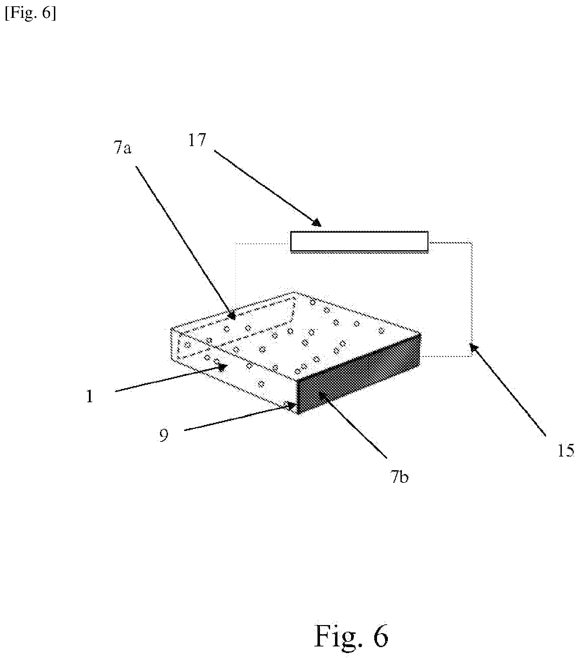

   [Fig.6] schematically shows a first possible construction of the heating device to be used in the vehicle seat of [Fig.1] or [Fig.2].
**Fig.7**

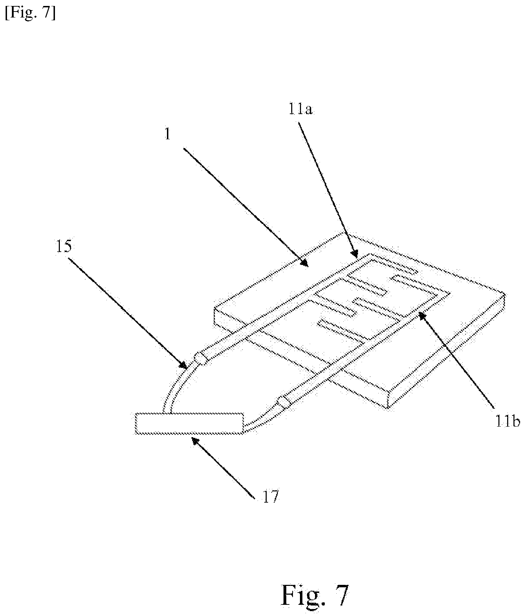

   [Fig.7] schematically shows a second possible construction of the heating device to be used in the vehicle seat of [Fig.1] or [Fig.2].
**Fig.8**

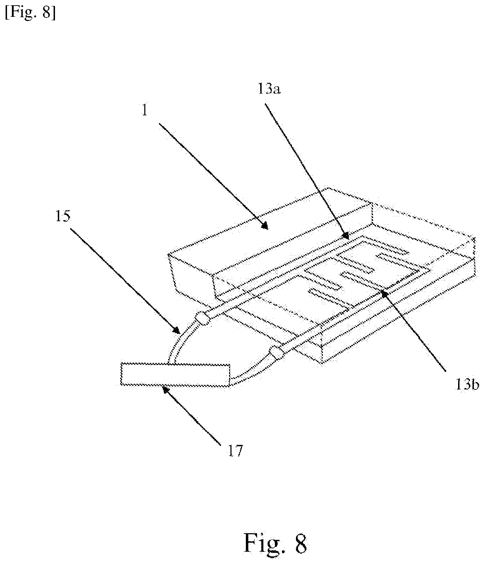

   [Fig.8] schematically shows a third possible construction of the heating device to be used in the vehicle seat of [Fig.1] or [Fig.2].

### Description of Embodiments

In the following description of preferred embodiments of the invention, reference will be made to a vehicle seat provided with a heating device. More specifically, reference will be made to a vehicle seat provided with a heating device at the cushion area and/or at the backrest area.

Such application, although particularly advantageous, shall not be intended as limiting and the invention could be also implemented for manufacturing several other components of a vehicle cockpit.

First of all, in case the vehicle seats comprise one or more armrests and/or a headrest, it is possible to envisage to apply the invention to the manufacturing of such armrest(s) and/or headrest.

Secondly, the invention finds application in manufacturing components of the cockpit other than the vehicle seats. In general, the invention can be used for manufacturing any component of the cockpit that comprises a padding and/or an upholstery, including the inner panels of the vehicle doors and the cockpit headliner.

The invention essentially relates to a cockpit component, such as a vehicle seat, provided with a heating device including a polyurethane-based foams charged and/or impregnated with an electrically conductive filler, such device being used for manufacturing the padding and/or the upholstery of the cockpit component.

By way of non-limiting example, a vehicle seat 10 according to a preferred embodiment invention is schematically shown in [Fig.1].

The vehicle seat 10 includes a seat cushion 12 and a seat backrest 14. In the shown example, the vehicle seat 10 further comprises an armrest 18 and a headrest 16.

In a per se now manner, each component of the vehicle seat 10 includes a rigid supporting frame (not visible in [Fig.1]), a padding, covering the rigid frame and guaranteeing an adequate comfort to the users, and an upholstery, fitted onto the padding and intended to provide the desired surface properties as well as the desired aesthetical appearance to the corresponding component.

In the embodiment of [Fig.1], a polyurethane-based foam charged with an electrically conductive filler 1 is used for manufacturing the padding of the seat cushion 12 and of the seat backrest 14.

In general, such polyurethane-based foam charged and/or impregnated with an electrically conductive filler 1 can be used for manufacturing the padding of the seat cushion 12 or one or more portions thereof and/or for manufacturing the padding of the seat backrest 14 or one or more portions thereof.

In addition, such polyurethane-based foam charged and/or impregnated with an electrically conductive filler 1 can be used for manufacturing the padding of the armrest 18 or one or more portions thereof and/or for manufacturing the padding of the headrest 16 or one or more portions thereof.

[Fig.2] shows an alternative embodiment of the invention in which, a polyurethane-based foam charged and/or impregnated with an electrically conductive filler 1 is used for manufacturing the upholstery of the seat cushion 12 and of the seat backrest 14.

In general, such polyurethane-based foam charged with an electrically conductive filler 1 can be used for manufacturing the upholstery of the seat cushion 12 or one or more portions thereof and/or for manufacturing the upholstery of the seat backrest 14 or one or more portions thereof.

In addition, such polyurethane-based foam charged and/or impregnated with an electrically conductive filler 1 can be used for manufacturing the upholstery of the armrest 18 or one or more portions thereof and/or for manufacturing the upholstery of the headrest 16 or one or more portions thereof.

As shown in [Fig.2], according to this embodiment of the invention, the polyurethane-based foam charged and/or impregnated with an electrically conductive filler 1 will be sandwiched between an inner base layer 2 and an outer decorative layer 4, thus forming an intermediate layer of the upholstery with a multilayer structure.

As better shown in Figures 3-5, the polyurethane-based foam charged and/or impregnated with an electrically conductive filler 1 comprises a polyurethane matrix 3 charged and/or impregnated with electrically conductive particles 5, 5', 5".

The conductive particle can be carbon-based particles and/or metal-based particles, wherein metal-based particles are meant to include both metal and alloys that are electrically conductive.

Such conductive particles can be three-dimensional particle 5, such as metal particles and/or carbon black particles (see [Fig.3]), substantially two-dimensional particles 5', such as graphite or graphene particles or graphene oxide or graphene nanoplatelets (see [Fig.4]), substantially mono-dimensional particles 5", such as carbon fibres or carbon nanotubes (see [Fig.5]), or any combination thereof.

Depending on the characteristics of the matrix 3 and of the filler particles 5, 5', 5", the concentration of such filler particles will be selected in order to be in the range between the percolation threshold and the saturation threshold of the resulting composite material.

Preferably, in order to effectively use the polyurethane foams charged with electrically conductive fillers for generating heat, the concentration of electrically conductive particle will be selected so as to be close to the saturation threshold, for instance in the 50% of the range between the percolation threshold and the saturation threshold closer to the saturation threshold, preferably in the 20% of said range closer to the saturation threshold.

In a manner known per se, the polyurethane matrix 3 of the foam is obtained from a first component containing at least one isocyanate and a second component containing at least one polyol.

The first and second components are mixed and poured into a metal mould, thus allowing the expansion and formation of the foam. The expansion is due to the carbon dioxide produced by the reaction between isocyanates and water, while gelation (which is responsible of the softness and flexibility of the foam) is obtained by the reaction between isocyanates and the -OH groups of polyols.

If use of a foam charged with an electrically conductive filler is envisaged, in order to obtain the foam of the invention, electrically conductive particles 5, 5', 5" are added to the first component or to the second component. The component is then subjected to a mixing step, intended to obtain a uniform distribution of the conductive particles within the component and, subsequently, in the resulting foam matrix. Such mixing step can be carried out, for instance, by mechanical stirring, by magnetic stirring, or by applying ultrasonic vibrations.

Said mixing step can be optionally followed by a step of thermal treatment, allowing to consolidating the resulting foam matrix. As mentioned above, the concentration of electrically conductive particles will be selected so that the resulting composite material is in the range between the percolation threshold and the saturation threshold. More in detail, such concentration will be preferably sufficiently high to ensure a good thermal conductivity of the resulting foam, so as to provide optimum transmission of generated heat to the outer surface of the vehicle seat; on the other hand, such concentration will be preferably sufficiently low to prevent the foam from becoming unstable or collapsing due to gravity effects related to the excessive presence of filler in the polyurethane matrix.

Thanks to the presence of electrically conductive particles, the foam charged with an electrically conductive filler 1 can be used for generating heat by Joule effect.

However, the Applicant has observed that addition of electrically conductive particles, namely in a concentration suitable for ensuring a good thermal/electrical conductivity of the resulting foam, might result in a deterioration of the mechanical properties of such foam, and even in the risk that the cell structure of the foam collapses.

Since according to the invention the foam is used as padding and/or upholstery of the vehicle cockpit component, such deterioration of its mechanical properties is not envisaged.

Accordingly, measures are taken in order to provide a compensation to the deterioration of the foam mechanical properties due to the addition of the electrically conductive particles.

In a preferred embodiment of the invention, such measures include addition of one or more blowing agents to the first component and/or to the second components used for manufacturing the foam.

More particularly, the type and amount of blowing agent(s) will be selected as a function of the concentration of electrically conductive particles.

In addition, other optional ingredients, including catalysts, surfactants, conductive fillers and other suitable chemical reagents, may be added to the first component and/ or to the second components used for manufacturing the foam according to desired mechanical properties of the resulting polyurethane matrix.

If use of a foam impregnated with an electrically conductive filler is envisaged, in order to obtain the foam of the invention, the polyurethane foam is immersed at least once in a solution containing at least one binder and at least one conductive filler, both uniformly distributed in the solution by mechanical agitation, by magnetic agitation or by applying ultrasonic vibrations.

Also in this case, during manufacturing of the polyurethane foam one or more blowing agents may be added into the composition, in order to compensate the deterioration of the foam mechanical properties due to subsequent impregnation with the electrically conductive filler.

Also in this case, a final step of thermal treatment, allowing to consolidating the foam matrix, could be envisaged.

It will be evident to the person skilled in the art that it will also be possible to provide a combination of the two techniques described above, and a polyurethane foam could be initially charged with an electrically conductive filler during its production, and then impregnated with an electrically conductive filler.

In this case, the electrically conductive filler used for charging the polyurethane foam can be either of the same type as the one used for impregnating the foam, or of a different type.

The polyurethane foam charged and/or impregnated with an electrically conductive filler can be used for generating heat by Joule effect.

To this purpose, according to the invention said foam charged and/or impregnated with an electrically conductive filler 1 is directly connected to means for generating a potential difference in order to obtain a heating (i.e. heat generating) device.

Figures 6-8 schematically show possible constructions of such heating device.

In the example of [Fig.6], the polyurethane foam charged and/or impregnated with an electrically conductive filler 1 is placed between a pair of metal electrodes 7a, 7b and coupled to them; said electrodes 7a, 7b being preferably placed on opposite sides of the foam and coupled to said foam by means of a conductive glue or paste or resin 9.

In the example in [Fig.7], the polyurethane foam charged and/or impregnated with an electrically conductive filler 1 is placed between a pair of electrodes 11a, 11b and coupled to them; said electrodes 11a, 11b being obtained from flexible printed circuit boards (FPCB).

Such flexible printed circuit boards may be replaced by electrically metal-based conductive inks, which can be printed on the foam for forming a pair of electrodes.

In the examples of [Fig.8], a pair of metal electrodes 13a, 13b are embedded in the polyurethane foam charged and/or impregnated with electrically conductive fillers 1. In this configuration, the metal electrodes 13a, 13b are preferably shaped as frame elements.

In all the above configurations, the electrodes 7a, 7b, 11a, 11b, 13a, 13b will be connected to a control and power generation circuit 15 comprising a control unit 17.

The control unit 17 is configured to apply an adequate potential difference between the electrodes, so that an electrical current passes through the polyurethane foam charged and/or impregnated with electrically conductive fillers 1 and heat is generated by Joule effect.

The control unit 17 is further configured to detect the electrical resistance offered by the polyurethane foam charged and/or impregnated with electrically conductive fillers 1 and to derive the temperature of such foam from the detected resistance, thanks to the relationship between temperature and electric resistivity of the foam.

In view of the above, temperature sensors can be advantageously omitted.

It is to be noted that the concentration of electrically conductive particles in the polyurethane foam can be selected so as to trigger a mechanism of self-regulation of the temperature of the resulting composite material: by applying a constant potential difference, the polyurethane foam charged and/or impregnated with electrically conductive fillers 1 reaches and maintains the desired temperature. Therefore, it can be considered a self-regulating heating device, which does not need the presence of temperature sensors.

By way of non-limiting examples, a foam charged with an electrically conductive filler according to the present invention could be obtained as follows:
Example 1: The foam is obtained through the reaction between polyol and isocyanate components, and at least one of them is containing nickel as metal-based electrically conductive filler. First, the polyol component is prepared by mixing and blending at least one polyol with one or more blowing agents. The polyols are polyether-based segments containing poly-ethylene oxide and poly-propylene oxide. The blowing agent is water. One or more surfactant and one or more catalysts may also be added. For instance, a silicone-based surfactant may be used and the catalysts can be primary, secondary, tertiary amines. In this example, the nickel particles are mixed in the polyol component by using mechanical stirring, in order to achieve uniform distribution of particles in the component. The nickel particles concentration is 50 wt%, close to saturation operating region. Then the isocyanate component, which could be toluene diisocyanate (TDI) or methylene diphenyl diisocyanate (MDI), is added to polyol component. The mixed components are poured into the mould, in order to obtain the foam as heater device. The obtained foam is characterized by a percolation threshold equal to 45 wt%, and a saturation threshold equal to 70 wt%.
Example 2: The foam is obtained through the reaction between polyol and isocyanate components, and at least one of them is containing carbon nanotubes as carbon-based electrically conductive filler. First, the polyol component is prepared by mixing and blending at least one polyol with one or more blowing agents. The polyols are polyether-based segments containing poly-ethylene oxide and poly-propylene oxide. The blowing agent is water. One or more surfactant and one or more catalysts may also be added. For instance, a silicone-based surfactant may be used and the catalysts can be primary, secondary, tertiary amines. In this example, the carbon nanotubes particles are mixed in the polyol component by using ultrasonication, in order to achieve uniform distribution of particles in the component. The carbon nanotubes particles concentration is 5 wt%, close to saturation operating region. Then the isocyanate component, which could be toluene diisocyanate (TDI) or methylene diphenyl diisocyanate (MDI), is added to polyol component. The mixed components are poured into the mould, in order to obtain the foam as heater device. The obtained foam is characterized by a percolation threshold equal to 1 wt%, and a saturation threshold equal to 6 wt%.

In both examples, the filler concentration is chosen in order to obtain a device with a good heating efficiency. The examples allow to understand that the filler type and size affect the filler concentration that is needed to obtain a high-performance heating device intrinsic to the vehicle seat.

On the other hand, the blowing agents are chosen in order to obtain a device with good mechanical properties, despite the addition of the filler.

As a non-limiting example, a foam impregnated with an electrically conductive filler according to the invention could be obtained as follows:
Example 3: Graphene nanoplates are dispersed in a tetrahydrofuran-based solution. At least one polyol is introduced into the solution, which polyol will act as a binder between the graphene nanoplates and polyurethane foam. The graphene nanoplates and the binder are evenly dispersed in the solution by magnetic agitation. The weight concentration of the graphene nanoplates in the tetrahydrofuran solution is 5%. The polyurethane foam (already formed) is immersed in the solution so that it is impregnated with the graphene nanoplates. Subsequently, the polyurethane foam is dried in an oven at a temperature of 60 °C in order to remove the residual solution. The impregnation, and subsequent drying, is repeated three times.

It is evident that the above detailed description has been given by way of example and several modifications and variations are possible without departing from the scope of protection of the invention as defined by the appended claims.

In detail, the materials used for manufacturing the polyurethane matrix, the nature and concentrations of the electrically conductive particles used as filler, the shape and size of the resulting foam as well as the specific constructional features of the electrodes and of the circuit connected thereto can be selected by the person skilled in the art according to his/her own knowledge as a function of the specific application and desired performances.

Moreover, the invention can be applied to a wide variety of component of the vehicle cockpit, including vehicle seats, inner panels of the vehicle doors and the cockpit headliner

## Claims

1. Vehicle cockpit component (10, 12, 14, 16, 18), of the kind comprising at least a supporting frame and a padding and/or an upholstery fitted on said supporting frame, wherein said component is provided with a heating device, wherein said heating device comprises a polyurethane-based foam charged and/or impregnated with an electrically conductive filler (1), said polyurethane-based foam charged and/or impregnated with an electrically conductive filler (1) being directly connected to means for generating a voltage difference (7a, 7b; 11a, 11b; 13a, 13b) for generating heat by Joule effect, **characterized in that** said heating device is used as padding and/or upholstery of said component and said polyurethane-based foam charged and/or impregnated with an electrically conductive filler (1) forms the padding and/or the upholstery of said component, at least at one or more portions of said padding and/or of said upholstery, respectively.

2. Vehicle cockpit component (10, 12, 14, 16, 18) according to claim 1, wherein said polyurethane-based foam charged and/or impregnated with an electrically conductive filler (1) is arranged between and coupled to a pair of metal electrodes (7a, 7b), which are bonded to said foam by means of a conductive glue or paste or resin (9) and are connected to a control and power generation circuit (15).

3. Vehicle cockpit component (10, 12, 14, 16, 18) according to claim 1, wherein said polyurethane-based foam charged and/or impregnated with an electrically conductive filler (1) is arranged between and coupled to a pair of electrodes obtained by means of flexible printed circuit boards (11a, 11b) and connected to a control and power generation circuit (15).

4. Vehicle cockpit component (10, 12, 14, 16, 18) according to claim 1, wherein said polyurethane-based foam charged and/or impregnated with an electrically conductive filler (1) is arranged between and coupled to a pair of electrodes obtained by means of printed conductive inks and connected to a control and power generation circuit (15).

5. Vehicle cockpit component (10, 12, 14, 16, 18) according to claim 1, wherein said polyurethane-based foam charged and/or impregnated with an electrically conductive filler (1) is provided with a pair of metal electrodes (13a, 13b) embedded in said foam and connected to a control and power generation circuit (15).

6. Vehicle cockpit component (10, 12, 14, 16, 18) according to any of the preceding claims, wherein said polyurethane-based foam is charged with an electrically conductive filler (1) and comprises a polyurethane matrix (3) and electrically conductive particles (5, 5', 5") dispersed in said matrix, the concentration of said electrically conductive particles (5, 5', 5") being selected so as to be in the range between the percolation threshold and the saturation threshold of the resulting composite material.

7. Vehicle cockpit component (10, 12, 14, 16, 18) according to claim 6, wherein said concentration of said electrically conductive particles (5, 5', 5") is selected so as to be in the 50% of said range between the percolation threshold and the saturation threshold of the resulting composite material closer to said saturation threshold of the resulting composite material, preferably in the 20% of said range between the percolation threshold and the saturation threshold of the resulting composite material closer to said saturation threshold of the resulting composite material.

8. Vehicle cockpit component (10, 12, 14, 16, 18) according to claim 6 or 7, wherein said electrically conductive particles are selected from the group including metal particles, carbon black particles, graphite particles, graphene particles, graphene oxide, graphene nanoplatelets, carbon fibres and carbon nanotubes.

9. Vehicle cockpit component (10, 12, 14, 16, 18) according to any of the preceding claims, wherein said vehicle cockpit component is a vehicle seat (10), a vehicle seat cushion (12), a vehicle seat backrest (14), a vehicle seat armrest (18), a vehicle seat headrest (16), an inner panel of a vehicle door, or the cockpit headliner.

10. Method for manufacturing a vehicle cockpit component according to claim 1, comprising the steps of:
- providing a first component containing at least one isocyanate;
- providing a second component containing at least one polyol;
- adding at least one electrically conductive filler to said first component and/or to said second component;
- mixing said first component and said second component;
- pouring into a mould to obtain a foam;
- using said foam as a padding or an upholstery of said vehicle cockpit component, said foam forming the padding or the upholstery of said component, at least at one or more portions of said padding or of said upholstery, respectively.

11. Method according to claim 10, wherein one or more blowing agents are added to said first component and/or to said second component.

12. Method for manufacturing a vehicle cockpit component according to claim 1, comprising the steps of:
- providing a first component containing at least one isocyanate;
- providing a second component containing at least one polyol;
- mixing said first component and said second component;
- pouring into a mould to obtain a foam;
- immersing said foam into a solution containing at least one electrically conductive filler;
- letting the foam dry;
- using said foam as a padding or an upholstery of said vehicle cockpit component, said foam forming the padding or the upholstery of said component, at least at one or more portions of said padding or of said upholstery, respectively.

13. Method according to claim 12, wherein the steps of immersing said foam into a solution containing an electrically conductive filler and letting the foam dry are repeated several times.

14. Method according to claim 12 or 13, wherein one or more blowing agents are added to said first component and/or to said second component

## Patentansprüche

1. Bauteil (10, 12, 14, 16, 18) eines Fahrzeugcockpits der Art, die wenigstens einen tragenden Rahmen und eine an dem tragenden Rahmen angebrachte Polsterung und/oder einen Bezug aufweist, aufweist, wobei das Bauteil mit einer Heizvorrichtung versehen ist, wobei die Heizvorrichtung einen Schaum auf Polyurethanbasis aufweist, der mit einem elektrisch leitenden Füllstoff (1) beladen und/oder imprägniert ist, wobei der mit elektrisch leitfähigem Füllstoff (1) beladene und/oder imprägnierte Schaum auf Polyurethanbasis zur Erzeugen von Wärme durch Joule-Effekt direkt an Mittel zum Erzeugen einer Spannungsdifferenz (7a, 7b; 11a, 11b; 13a, 13b) angeschlossen ist, **dadurch gekennzeichnet, dass** die Heizvorrichtung als Polsterung und/oder Bezug des Bauteils verwendet wird und der mit einem elektrisch leitfähigen Füllstoff (1) beladene oder imprägnierte Schaum auf Polyurethanbasis die Polsterung und/oder den Bezug des Bauteils zumindest in einem oder mehreren Abschnitten der Polsterung und/oder des Bezugs bildet.

2. Bauteil (10, 12, 14, 16, 18) eines Fahrzeugcockpits nach Anspruch 1, wobei der mit einem elektrisch leitenden Füllstoff (1) beladene oder imprägnierte Schaum auf Polyurethanbasis zwischen einem Paar Metallelektroden (7a, 7b) angeordnet und an diese gekoppelt ist, die mit dem Schaum mittels eines leitfähigen Klebers oder Paste oder Harz (9) verbunden sind und an eine Steuer- und Spannungserzeugungsschaltung (15) angeschlossen sind.

3. Bauteil (10, 12, 14, 16, 18) eines Fahrzeugcockpits nach Anspruch 1, wobei der mit einem elektrisch leitenden Füllstoff (1) beladene und/oder imprägnierte Schaum auf Polyurethanbasis zwischen einem Paar von Elektroden angeordnet und an diese gekoppelt ist, die mittels flexibler Leiterplatten (11a, 11b) geschaffen und an die Steuer- und Spannungserzeugungsschaltung (15) angeschlossen sind.

4. Bauteil (10, 12, 14, 16, 18) eines Fahrzeugcockpits nach Anspruch 1, wobei der mit einem elektrisch leitenden Füllstoff (1) beladene oder imprägnierte Schaum auf Polyurethanbasis zwischen einem Paar von Elektroden angeordnet und an diese anschlossen ist, die mittels gedruckter leitfähiger Tinten geschaffen wurden und an eine Steuer- und Spannungserzeugungsschaltung (15) angeschlossen sind.

5. Bauteil (10, 12, 14, 16, 18) eines Fahrzeugcockpits nach Anspruch 1, wobei der mit einem elektrisch leitenden Füllstoff (1) beladene oder imprägnierte Schaum auf Polyurethanbasis mit einem Paar Metallelektroden (13a, 13b) versehen ist, die in den Schaum eingebettet und an eine Steuer- und Spannungserzeugungsschaltung (15) angeschlossen sind.

6. Bauteil (10, 12, 14, 16, 18) eines Fahrzeugcockpits nach einem der vorstehenden Ansprüche, wobei der Schaum auf Polyurethanbasis mit einem elektrisch leitenden Füllstoff (1) beladen ist und eine Polyurethanmatrix (3) aufweist und elektrisch leitfähigen Partikel (5, 5', 5") in dieser Matrix verteilt sind, wobei die Konzentration der elektrisch leitfähigen Partikel (5, 5', 5") so gewählt ist, dass sie in dem Bereich zwischen der Perkolationsschwelle und der Sättigungsschwelle des erhaltenen Verbundwerkstoffs liegt.

7. Bauteil (10, 12, 14, 16, 18) eines Fahrzeugcockpits nach Anspruch 6, wobei die Konzentration der elektrisch leitfähigen Partikel (5, 5', 5") so gewählt ist, dass sie in den 50% des Bereichs zwischen der Perkolationsschwelle und der Sättigungsschwelle des erhaltenen Verbundwerkstoffs liegen, die näher an der Sättigungsschwelle des erhaltenen Verbundwerkstoffs liegen, vorzugsweise in den 20% des Bereichs zwischen der Perkolationsschwelle und der Sättigungsschwelle des erhaltenen Verbundwerkstoffs, die näher an der Sättigungsschwelle des erhaltenen Verbundwerkstoffs liegen.

8. Bauteil (10, 12, 14, 16, 18) eines Fahrzeugcockpits nach Anspruch 6 oder 7, wobei die elektrisch leitfähigen Partikel aus der Gruppe gewählt sind, die Metallpartikel, Rußpartikel, Graphitpartikel, Graphenpartikel, Graphenoxid, Graphennanoplättchen, Kohlenstofffasern und Kohlenstoffnanoröhrchen enthält.

9. Bauteil (10, 12, 14, 16, 18) eines Fahrzeugcockpits nach einem der vorstehenden Ansprüche, wobei das Bauteil eines Fahrzeugcockpits ein Fahrzeugsitz (10), ein Fahrzeugsitzkissen (12), eine Fahrzeugsitzlehne (14), eine Fahrzeugsitzarmstütze (18), eine Fahrzeugsitzkopfstütze (16), ein Innenpanel einer Fahrzeugtür oder der Cockpithimmel ist.

10. Verfahren zum Herstellen eines Bauteils eines Fahrzeugcockpits nach Anspruch 1, mit den Schritten:
- Bereitstellen einer ersten Komponente, die wenigstens ein Isocyanat enthält,
- Bereitstellen einer zweiten Komponente, die wenigstens ein Polyol enthält,
- Zufügen wenigstens eines elektrisch leitenden Füllstoffs zu der ersten Komponente und/oder zu der zweiten Komponente,
- Mischen der ersten Komponente und der zweiten Komponente,
- Gießen in eine Form, um einen Schaum zu erhalten,
- Verwenden des Schaums als Polster oder Bezug des Bauteils eines Fahrzeugcockpits, wobei der Schaum, der die Polsterung oder den Bezug des Bauteils bildet, zumindest einen oder mehrere Abschnitte des Polsters oder des Bezugs bildet.

11. Verfahren nach Anspruch 10, wobei ein oder mehrere Blähmittel der ersten Komponente und/oder der zweiten Komponente zugefügt werden.

12. Verfahren zum Herstellen eines Bauteils eines Fahrzeugcockpits nach Anspruch 1, mit den Schritten:
- Bereitstellen einer ersten Komponente, die wenigstens ein Isocyanat enthält,
- Bereitstellen einer zweiten Komponente, die wenigstens ein Polyol enthält,
- Mischen der ersten Komponente und der zweiten Komponente,
- Gießen in eine Form, um einen Schaum zu erhalten,
- Eintauchen des Schaums in eine Lösung, die wenigstens einen elektrisch leitenden Füllstoff enthält,
- Trocknen lassen des Schaums,
- Verwenden des Schaums als Polsterung oder Bezug des Bauteils eines Fahrzeugcockpits, wobei der Schaum die Polsterung oder den Bezug des Bauteils zumindest an einem oder mehreren Abschnitten der Polsterung oder des Bezugs bildet.

13. Verfahren nach Anspruch 12, wobei der Schritt des Eintauchens des Schaums in eine Lösung, die einen elektrisch leitenden Füllstoff enthält und das Trocknen lassen des Schaums mehrere Male wiederholt werden.

14. Verfahren nach Anspruch 12 oder 13, wobei ein oder mehrere Blähmittel der ersten Komponente und/oder der zweiten Komponente zugefügt werden.

## Revendications

1. - Composant de poste de pilotage de véhicule (10, 12, 14, 16, 18), du type comprenant au moins un châssis de support et un rembourrage et/ou une garniture ajusté sur ledit châssis de support, ledit composant comportant un dispositif chauffant, ledit dispositif chauffant comprenant une mousse à base de polyuréthane chargée et/ou imprégnée d'une charge électroconductrice (1), ladite mousse à base de polyuréthane chargée et/ou imprégnée d'une charge électroconductrice (1) étant directement reliée à des moyens pour générer une différence de tension (7a, 7b ; 11a, 11b ; 13a, 13b) pour générer de la chaleur par effet Joule, **caractérisé par le fait que** ledit dispositif chauffant est utilisé comme rembourrage et/ou garniture dudit composant et ladite mousse à base de polyuréthane chargée et/ou imprégnée d'une charge électroconductrice (1) forme le rembourrage et/ou la garniture dudit composant, au moins à une ou plusieurs parties dudit rembourrage et/ou de ladite garniture, respectivement.

2. - Composant de poste de pilotage de véhicule (10, 12, 14, 16, 18) selon la revendication 1, dans lequel ladite mousse à base de polyuréthane chargée et/ou imprégnée d'une charge électroconductrice (1) est disposée entre et couplée à une paire d'électrodes métalliques (7a, 7b), qui sont liées à ladite mousse au moyen d'une colle ou pâte ou résine conductrice (9) et sont reliées à un circuit de commande et de génération de puissance (15).

3. - Composant de poste de pilotage de véhicule (10, 12, 14, 16, 18) selon la revendication 1, dans lequel ladite mousse à base de polyuréthane chargée et/ou imprégnée d'une charge électroconductrice (1) est disposée entre et couplée à une paire d'électrodes obtenues au moyen de cartes de circuit imprimé flexibles (11a, 11b) et reliées à un circuit de commande et de génération de puissance (15).

4. - Composant de poste de pilotage de véhicule (10, 12, 14, 16, 18) selon la revendication 1, dans lequel ladite mousse à base de polyuréthane chargée et/ou imprégnée d'une charge électroconductrice (1) est disposée entre et couplée à une paire d'électrodes obtenues au moyen d'encres conductrices imprimées et reliées à un circuit de commande et de génération de puissance (15).

5. - Composant de poste de pilotage de véhicule (10, 12, 14, 16, 18) selon la revendication 1, dans lequel ladite mousse à base de polyuréthane chargée et/ou imprégnée d'une charge électroconductrice (1) comporte une paire d'électrodes métalliques (13a, 13b) noyées dans ladite mousse et reliées à un circuit de commande et de génération de puissance (15).

6. - Composant de poste de pilotage de véhicule (10, 12, 14, 16, 18) selon l'une quelconque des revendications précédentes, dans lequel ladite mousse à base de polyuréthane est chargée d'une charge électroconductrice (1) et comprend une matrice de polyuréthane (3) et des particules électroconductrices (5, 5', 5") dispersées dans ladite matrice, la concentration desdites particules électroconductrices (5, 5', 5") étant choisie de façon à être comprise dans la plage entre le seuil de percolation et le seuil de saturation du matériau composite résultant.

7. - Composant de poste de pilotage de véhicule (10, 12, 14, 16, 18) selon la revendication 6, dans lequel ladite concentration desdites particules électroconductrices (5, 5', 5") est choisie de façon à être dans la limite des 50% de ladite plage entre le seuil de percolation et le seuil de saturation du matériau composite résultant plus proches dudit seuil de saturation du matériau composite résultant, de préférence dans la limite des 20% de ladite plage entre le seuil de percolation et le seuil de saturation du matériau composite résultant plus proches dudit seuil de saturation du matériau composite résultant.

8. - Composant de poste de pilotage de véhicule (10, 12, 14, 16, 18) selon la revendication 6 ou 7, dans lequel lesdites particules électroconductrices sont choisies dans le groupe comprenant des particules métalliques, des particules de noir de carbone, des particules de graphite, des particules de graphène, de l'oxyde de graphène, des nanoplaquettes de graphène, des fibres de carbone et des nanotubes de carbone.

9. - Composant de poste de pilotage de véhicule (10, 12, 14, 16, 18) selon l'une quelconque des revendications précédentes, dans lequel ledit composant de poste de pilotage de véhicule est un siège de véhicule (10), un coussin de siège de véhicule (12), un dossier de siège de véhicule (14), un accoudoir de siège de véhicule (18), un appui-tête de siège de véhicule (16), un panneau intérieur d'une porte de véhicule ou la garniture de toit de poste de pilotage.

10. - Procédé de fabrication d'un composant de poste de pilotage de véhicule selon la revendication 1, comprenant les étapes :
- disposer un premier composant contenant au moins un isocyanate ;
- disposer un second composant contenant au moins un polyol ;
- ajouter au moins une charge électroconductrice audit premier composant et/ou audit second composant ;
- mélanger ledit premier composant et ledit second composant ;
- verser dans un moule pour obtenir une mousse ;
- utiliser ladite mousse comme rembourrage ou garniture dudit composant de poste de pilotage de véhicule, ladite mousse formant le rembourrage ou la garniture dudit composant, au moins à une ou plusieurs parties dudit rembourrage ou de ladite garniture, respectivement.

11. - Procédé selon la revendication 10, dans lequel un ou plusieurs agents de gonflement sont ajoutés audit premier composant et/ou audit second composant.

12. - Procédé de fabrication d'un composant de poste de pilotage de véhicule selon la revendication 1, comprenant les étapes :
- disposer un premier composant contenant au moins un isocyanate ;
- disposer un second composant contenant au moins un polyol ;
- mélanger ledit premier composant et ledit second composant ;
- verser dans un moule pour obtenir une mousse ;
- immerger ladite mousse dans une solution contenant au moins une charge électroconductrice ;
- laisser la mousse sécher ;
- utiliser ladite mousse comme rembourrage ou garniture dudit composant de poste de pilotage de véhicule, ladite mousse formant le rembourrage ou la garniture dudit composant, au moins à une ou plusieurs parties dudit rembourrage ou de ladite garniture, respectivement.

13. - Procédé selon la revendication 12, dans lequel les étapes consistant à immerger ladite mousse dans une solution contenant une charge électroconductrice et à laisser la mousse sécher sont répétées plusieurs fois.

14. - Procédé selon la revendication 12 ou 13, dans lequel un ou plusieurs agents de gonflement sont ajoutés audit premier composant et/ou audit second composant.
